# EUROPEAN PATENT APPLICATION

(11) **EP 4 790 183 A1**
(43) Date of publication of application: **12.08.2026**
(21) Application number: 25156355.7
(22) Date of filing: 06.02.2025
(51) Int. Cl.: D06F 37/26, D06F 37/20

(54) **WEIGHT DEVICE FOR A WASHING MACHINE WITH A DILATATION DEVICE**

(71) Applicant: ARMETON INTERNATIONAL DMCC, 923036 Dubai (AE)
(72) Inventor: HABESTOR, Emanuel, Dubai (AE)
(74) Representative: Mathys & Squire

(57) **Abstract**

The invention is related to a weight device (10) for increasing stability of a washing drum of a washing machine, comprising at least two weight bodies (20), wherein each weight body (20) has at least one mounting interface (22) to be mounted at a counter-mounting-interface of the washing machine, and wherein each weight body (20) is capable to be placed in a position at least partly surrounding an access opening of the washing machine providing access to the washing drum. The weight device (10) further comprises at least one dilatation device (30) for connecting the at least two weight bodies (20).

## Description

The present invention is related to a weight device for increasing stability of a washing drum of a washing machine as well as to a production method for producing such a weight device.

It is known to provide weight devices for increasing stability of washing drums. During the washing process of a washing machine situations occur where the washing drum is rotated with high speed. High speed rotation comes along with vibrations. To stabilize the vibrations, damp the vibrations and in particular ensure the stability of the washing machine during high-speed rotational situations it is known to provide additional weight to the washing machine. A preferred position of those weight devices providing additional weight is to locate those weights close to the access opening of the washing machine. Those access openings usually are of circular shape and are closed with a circular closure. It is also known to provide a sealing device sealing that closure against the circular opening. In particular at this opening end of the washing drum, vibrations are very harmful to the washing machine. Therefore, the known weight devices usually are located surrounding the circular opening thereby providing the necessary increased stability exactly at the desired location.

The washing machines due to market demands have more and more washing capacity in the same standard sized housing. That means that the space (useful volume for the weight device) is less and less. As the space for the weight device is shrinking inside the washing machine, especially on the right side (where the lock is), the weight device starts to be thin and barely producible. If the weight device is kept unified the reduction of thickness reduces the weight in that location and additionally reduces the stability. It might lead to the risk of cracks and breaking of the weight device due to high vibration situations. This is in particular the fact if the weight device usually is made out of a robust but breakable material like concrete. It is known to produce these weight devices in that a plastic cover is filled with concrete. But such a production is complex and expensive.

Concrete is a rigid, very stiff material, so the weight device comprising concrete is prone to crack in certain conditions. Specially in regions of a washing machine where the thickness cannot be achieved due to geometrical requirements of other components. A thin region of the weight device between two masses of the weight device is prone to crack almost always. The cracks of the weight device cannot be always avoided adjusting the mixture and the ratio of cement, and also cannot be always avoided with the use of sole reinforcement.

It is an objective of the present invention to overcome the disadvantages described above at least partly. In particular, it is an objective of the present invention to provide a weight device which is not prone to crack. It is a further objective to provide a production method for producing such a weight device.

Aforesaid problem is solved by a weight device with the features of claim 1 as well as a production method with the features of claim 11. Further features and details of the invention result from the subclaims, the description and the drawings. Features and details described in connection with the weight device according to the invention naturally also apply in connection with the production method according to the invention, and vice versa, so that reference is or can always be made mutually with regard to the disclosure concerning the individual aspects of the invention.

According to the present invention a weight device for increasing stability of a washing drum of a washing machine is described. The weight device comprises at least two weight bodies, wherein each weight body has at least one mounting interface to be mounted at a counter-mounting-interface of the washing machine, and wherein each weight body is capable to be placed in a position at least partly surrounding an access opening of the washing machine providing access to the washing drum. The weight device further comprises at least one dilatation device for connecting the at least two weight bodies.

Each weight body is a separate element. Because of the at least one dilatation device the weight device can be mounted as a single device because the at least one dilatation device connects the at least two weight bodies. Therefore, the effort for example for screwing and therefore the costs can be reduced compared to mounting two or more completely separated weight bodies. There are less fixation screws necessary to mount the weight device. Further, the weight device has more fixation points compared with only one weight body. This increased number of fixation points compared with only one weight body leads to a higher security.

The at least one dilatation device further allows a relative movement of the at least two weight bodies. The at least one dilatation device can be arranged in an artificial crack at the weakest point of the weight device.

The weight device comprising the at least one dilatation device has the further advantages that the time of development of the weight device is shortened, that cracks in critical regions can be avoided, that the lifespan of the weight device is improved, that the weight device can have a more versatile shape, that with the weight device there can be a more versatile engineering of washing machines, that the weight device can have a large spectrum of use, and finally that there can be an easier manipulation and handling of the weight device during transport to the customer and during assembly.

Especially, the weight device can comprise two weight bodies and two dilatation devices or four weight bodies and four dilatation devices.

The dilatation device can be an expansion joint. Further, the dilatation device can establish a flexible connection between the at least two weight bodies. The flexible connection leads to the advantage that the weight device can not break at the flexible connection. Therefore, the areas of the weight bodies connecting to the dilatation device and the dilatation device itself can be made thin.

The weight device can be used for increasing the stability of a washing drum of a washing machine. Especially, the weight device can stabilize the washing machines washing tub. Further, the counter-mounting-interface of the washing machine can be located at the washing tub of the washing machine.

That each weight body is capable to be placed in a position at least partly surrounding an access opening of the washing machine can mean that each weight body has at least partly a circular or oval shape.

The term washing machine is used for classical washing machines, classical drying machines and/or classical wash & dry machines.

According to an aspect of the weight device a length of the at least one dilatation device is smaller than a diameter of the at least one dilatation device.

The length of the at least one dilatation device can be the shortest distance between the at least two weight bodies. Further, the diameter of the at least one dilatation device can be the shortest extension in the width direction of the at least one dilatation device. The width direction is measured perpendicular to the length of the at least one dilatation device.

The length of the at least one dilatation device can be kept short. A small "crack" in the concrete, that means a short distance between the at least two weight bodies, increases the weight of the weight device compared to a weight device comprising a larger length of the at least one dilatation device. This is the case because concrete is heavier than the material of the at least one dilatation device.

The length of the at least one dilatation device can be in the range of 1 mm to 20 mm, and preferably in the range of 2 mm to 10 mm. Further, the length of the at least one dilatation device can be in the range from 30% to 70%, preferably from 40% to 60% of the diameter of the at least one dilatation device. Therefore, crumbles of the concrete can be avoided.

According to a further aspect of the weight device the at least one dilatation device comprises an elastic material. The elastic material can comprise rubber. Alternatively, the elastic material can consist of rubber.

The at least two weight bodies and the at least one dilatation device have different densities. That means that the weight bodies are much heavier per volume than the dilatation device.

According to a further aspect of the weight device the at least one dilatation device is arranged next to the parts of the at least two weight bodies with the smallest width. Advantageously, the at least one dilatation device is then arranged at the weakest point of the weight device.

According to a further aspect of the weight device the at least one dilatation device is glued on two opposing sides to the at least two weight bodies. That means a first side of the at least one dilatation device is glued to a first weight body and a second side of the at least one dilatation device is glued to a second weight body.

According to a further aspect of the weight device the at least one dilatation device comprises a reinforcement element and a dilatation element, wherein the reinforcement element connects the at least one dilatation device with the at least two weight bodies, and wherein the reinforcement element extends through the dilatation element.

The reinforcement element can be a fixation stick or a fixation wire. The material of the fixation stick or the fixation wire can comprise plastic, rubber and/or metal. Further, the material of the dilatation element can comprise plastic and/or rubber.

According to a further aspect of the weight device the reinforcement element is anchored to keep the at least one dilatation device and the at least two weight bodies together. That the reinforcement element is anchored can have the meaning that each of the ends of the reinforcement element has an anchor to fix the reinforcement element. The shape of each of the anchors can be capable of fixing the reinforcement element.

According to a further aspect of the weight device a length of the reinforcement element extends symmetrically on both sides of the dilatation element. The length of the reinforcement element extending from the dilatation element can be shorter as the respective weight body, as long as the respective weight body or longer as the respective weight body. That means it is possible that the reinforcement element extends beyond the respective weight bodies.

Alternatively, the reinforcement element can have a different length on each side of the dilatation element.

According to a further aspect of the weight device the reinforcement element comprises a curved geometry. The reinforcement element can be ribbed or ripped for example. Therefore, the connection between the at least one dilatation device and the at least two weight bodies can be improved.

According to a further aspect of the weight device the reinforcement element comprises two anchors, wherein each anchor is connected to one of the mounting interfaces. Each anchor can be connected to a mounting interface and each mounting interface can be connected to a counter-mounting-interface of the washing machine. That means there is a connection between the respective anchor and the respective counter-mounting-interface of the washing machine.

Each anchor can comprise curves, a hook and/or different diameters of the reinforcement element. Thus, because of the anchor the reinforcement element is extraction secured against axial pull out.

According to the present invention a production method for producing a weight device for increasing stability of a washing drum of a washing machine is described. The production method comprises the following steps:
producing at least two weight bodies, wherein each weight body has at least one mounting interface to be mounted at a counter-mounting-interface of the washing machine, and wherein each weight body is capable to be placed in a position at least partly surrounding an access opening of the washing machine providing access to the washing drum,
producing at least one dilatation device, and
connecting the at least two weight bodies and the at least one dilatation device.

The order of the steps can be changed. Further, more than one step can be performed at the same time. Advantageously, a weight device produced with the production method according to the invention has the same advantages as the weight device as described before.

According to an aspect of the production method the at least one dilatation device is fixed in a mould in one location and then the at least two weight bodies are cast using the mould. According to this production method the at least two weight bodies and the at least one dilatation device are automatically connected after the casting pro-cess.

According to a further aspect of the production method the at least two weight bodies are cast using one mould and then the at least two weight bodies are separated or each of the at least two weight bodies is cast using a separate mould. If the two weight bodies are cast using one mould the two weight bodies can be sawn apart. Advantageously, two separate weight bodies can be produced easily using these steps.

According to a further aspect of the production method the at least one dilatation device is arranged in that a first side of the at least one dilatation device faces a first weight body of the at least two weight bodies and a second side of the at least one dilatation device faces a second weight body of the at least two weight bodies. Finally, the at least one dilatation device and the at least two weight bodies are connected to each other.

According to a further aspect of the production method the at least one dilatation device is produced by passing a reinforcement element through a dilatation element. The reinforcement element can be a fixation wire or a fixation stick. The material of the fixation stick or the fixation wire can comprise plastic, rubber and/or metal. Further, the material of the dilatation element can comprise plastic and/or rubber.

Further advantages, features and details of the invention will be apparent from the following description, in which embodiments of the invention are described in detail with reference to the drawings. Those drawings show:
- Figure 1: a schematic view of a part of a weight device according to an embodiment of the invention,
- Figure 2: a schematic perspective view of a dilatation device with a reinforcement element,
- Figure 3: a schematic view of a part of a weight device according to a further embodiment of the invention,
- Figure 4: a flow chart of a production method for producing a weight device 10 according to an embodiment of the invention,
- Figure 5: a schematic view of a concrete element for producing a weight device, and
- Figure 6: a schematic view of the concrete element of Fig. 4 with a gap.

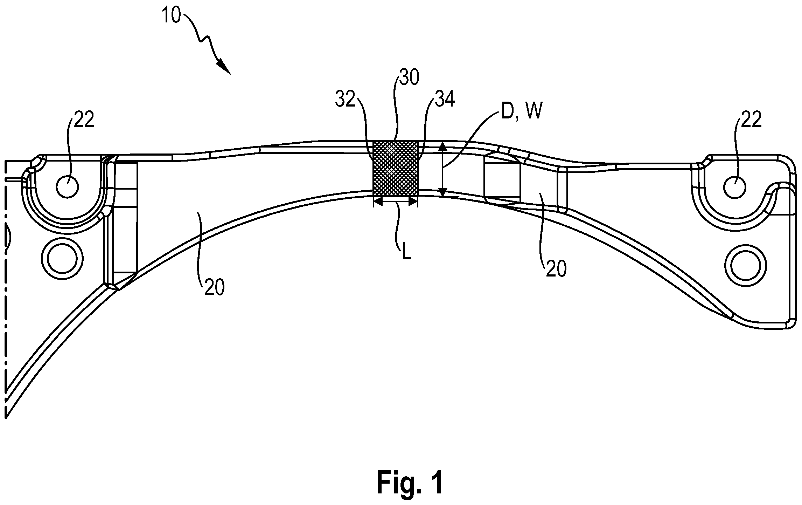

Fig. 1 shows a schematic view of a part of a weight device 10 according to an embodiment of the invention. The weight device 10 is used for increasing the stability of a washing drum of a washing machine. The weight device 10 comprises at least two weight bodies 20 and at least one dilatation device 30 for connecting the at least two weight bodies 20.

Each weight body 20 comprises at least one mounting interface 22 which can be mounted at a counter-mounting-interface of the washing machine. Further, each weight body 20 is designed to be placed in a position at least partly surrounding an access opening of the washing machine, wherein the access opening provides access to the washing drum.

The weight device 10 can be mounted as a single device in the washing machine. Because the dilatation device 30 connects the two weight bodies 20 these parts do not have to be mounted separately. The dilatation device 30 comprises an elastic material, for example rubber. Therefore, the weight device 10 is not prone to crack in the area of the dilatation device 30. The material of the weight bodies 20 is for example concrete.

As can be seen in Fig. 1 the length L of the dilatation device 30 is smaller than the diameter D of the dilatation device 30. The length L of the dilatation device 30 can be in the range of 1 mm to 20 mm, and preferably in the range of 2 mm to 10 mm. Further, the ratio of the length L of the dilatation device 30 to the diameter D of the dilatation device 30 can be in the range from 30% to 70%, preferably from 40% to 60%.

In Fig. 1 the dilatation device 30 is arranged next to the parts of the two weight bodies 20 with the smallest width W. Therefore, the dilatation device 30 is arranged at the weakest point of the weight device 10. Thus, the weight device 10 is not prone to crack easily.

The dilatation device 30 comprises a first side 32 and a second side 34. The sides 32, 34 of the dilatation device 30 are opposite to each other. The dilatation device 30 can be glued to one of the weight bodies 20 with its first side 32 and to another of the weight bodies 20 with its second side 34.

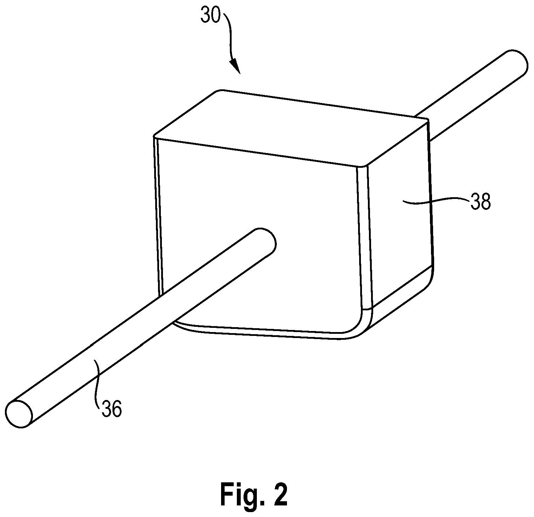

Fig. 2 shows a schematic perspective view of a dilatation device 30. The dilatation device 30 comprises a dilatation element 38 and a reinforcement element 36. The reinforcement element 36 extends through the dilatation element 38. Further, the reinforcement element 36 is used to connect the dilatation device 30 with the weight bodies 20.

As can be seen in Fig. 2 the reinforcement element 36 is a fixation stick. Alternatively, the reinforcement element 36 can also be a fixation wire. The material of the dilatation element 38 can comprise plastic and/or rubber and the material of the fixation stick or fixation wire can comprise plastic, rubber and/or metal.

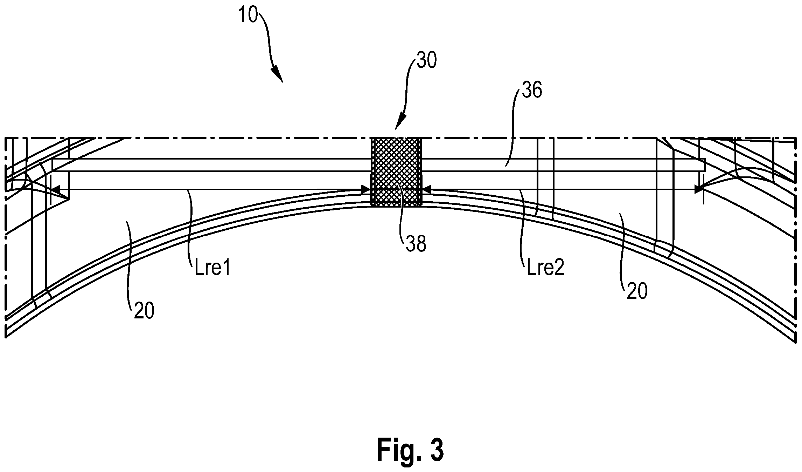

Fig. 3 shows a schematic view of a part of a weight device 10 according to a further embodiment of the invention. The weight device 10 comprises a dilatation device 30 as shown in Fig. 2. The length of the reinforcement element 36 can be the same on both sides of the dilatation element 38. However, as shown in Fig. 3, first length Lre1 of the reinforcement element 36 extending on the left side of the dilatation element 38 can also be different from the second length Lre2 of the reinforcement element 36 extending on the right side of the dilatation element 38. It is also possible that the reinforcement element 36 extends beyond the weight bodies 20 on one or two sides.

The reinforcement element 36, as shown in Fig. 3, comprises a plane geometry. Alternatively, the reinforcement element 36 can comprise a curved geometry. Comprising a curved geometry can have the meaning that the reinforcement element 36 comprises bends and/or bulges.

Further, the reinforcement element 36 can comprise at least two anchors (not shown in Fig. 3). The anchors can be used to connect to the mounting interfaces 22 of the weight bodies 20. Further, the anchors can be used to keep the dilatation device 30 and the two weight bodies 20 together. Also direct connections between the anchors and the counter-mounting-interfaces of the washing machine are possible.

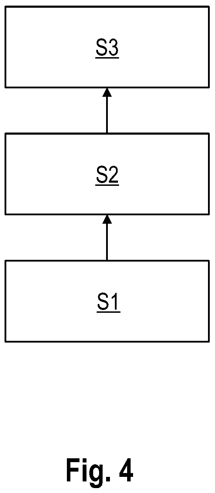

Fig. 4 shows a flow chart of a production method for producing a weight device 10 according to an embodiment of the invention. The produced weight device 10 is used for increasing the stability of a washing drum of a washing machine. The production method comprises the following steps:

In a first step S1 at least two weight bodies 20 are produced. Each weight body 20 has at least one mounting interface 22 to be mounted at a counter-mounting-interface of the washing machine. Further, each weight body 20 is capable to be placed in a position at least partly surrounding an access opening of the washing machine providing access to the washing drum.

In a second step S2 at least one dilatation device 30 is produced. The at least one dilatation device 30 can be produced by passing the reinforcement element 36 through the dilatation element 38.

In a third step S3 the at least two weight bodies 20 and the at least one dilatation device 30 are connected.

The order of the above mentioned steps S1, S2 and S3 can be changed. Further, more than one step of the steps S1, S2 and S3 can be performed at the same time.

For example step S2 can be performed first and then step S1 and step S3 can be performed at the same time. That means first the dilatation device 30 is produced. Then the dilatation device 30 is fixed in a mould in one location and then the at least two weight bodies 20 are cast using this mould. That means the production of the weight bodies 20 and the connection of the dilatation device 30 with the weight bodies 20 is at the same time.

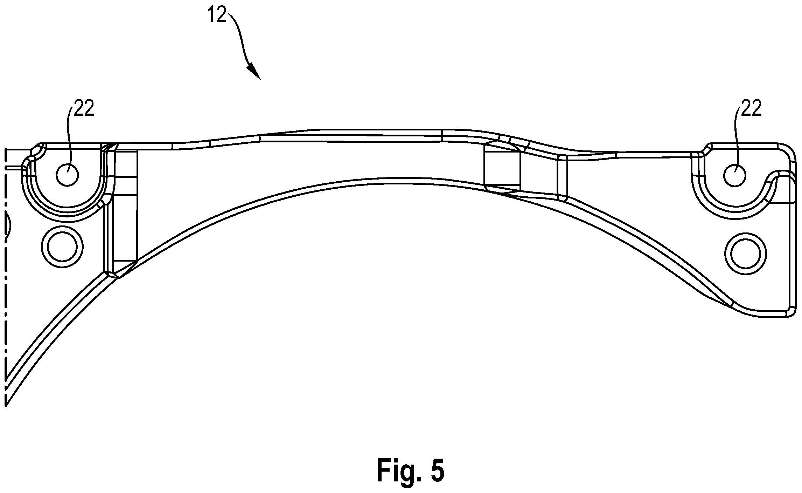

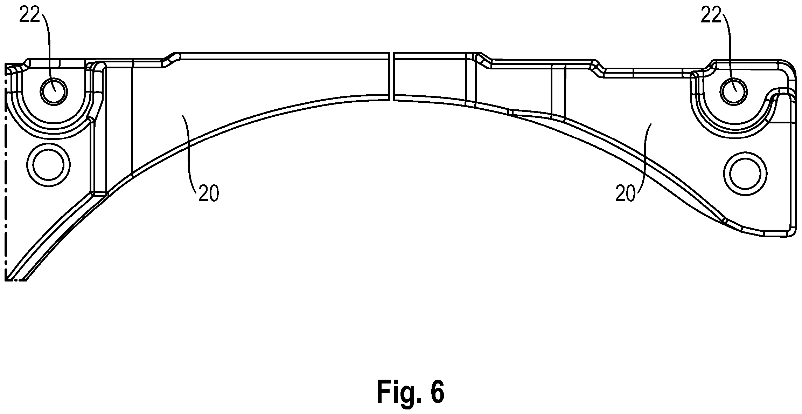

In another example step S1 is performed first. For example the two weight bodies 20 are cast using one mould. The result is shown in Fig. 5. In Fig. 5 a schematic view of a concrete element 12 for producing a weight device 10 is shown. The concrete element 12 is then divided into two weight bodies 20. Fig. 6 shows a schematic view of the concrete element 12 of Fig. 4 with a gap that means Fig. 6 shows two separated weight bodies 20. Alternatively, it is also possible to cast the two weight bodies 20 using a separate mould for every weight body 20.

Then the dilatation device 30 is produced (step S2). Finally, the dilatation device 30 is arranged in that a first side 32 of the dilatation device 30 faces a first weight body 20 of the two weight bodies 20 and a second side 34 of the dilatation device 30 faces a second weight body 20 of the two weight bodies 20 for connecting the dilatation device 30 and the two weight bodies 20 (step S3).

The above description of the drawings describes the present invention by way of example only.

### Reference signs

- 10: weight device
- 12: concrete element
- 20: weight body
- 22: mounting interface
- 30: dilatation device
- 32: first side of the dilatation device
- 34: second side of the dilatation device
- 36: reinforcement element
- 38: dilatation element

- L: length of dilatation device
- D: diameter of dilatation device
- W: smallest width of the weight body
- Lre1: first length of the reinforcement element
- Lre2: second length of the reinforcement element
- S1: first step
- S2: second step
- S3: third step

## Claims

1. Weight device (10) for increasing stability of a washing drum of a washing machine, comprising at least two weight bodies (20), wherein each weight body (20) has at least one mounting interface (22) to be mounted at a counter-mounting-interface of the washing machine, and wherein each weight body (20) is capable to be placed in a position at least partly surrounding an access opening of the washing machine providing access to the washing drum,
**characterized by** at least one dilatation device (30) for connecting the at least two weight bodies (20).

2. Weight device (10) according to claim 1, **characterized in that** a length (L) of the at least one dilatation device (30) is smaller than a diameter (D) of the at least one dilatation device (30).

3. Weight device (10) according to claim 1 or 2, **characterized in that** the at least one dilatation device (30) comprises an elastic material.

4. Weight device (10) according to any of the preceding claims, **characterized in that** the at least one dilatation device (30) is arranged next to the parts of the at least two weight bodies (20) with the smallest width (W).

5. Weight device (10) according to any of the preceding claims, **characterized in that** the at least one dilatation device (30) is glued on two opposing sides (32, 34) to the at least two weight bodies (20).

6. Weight device (10) according to any of the preceding claims, **characterized in that** the at least one dilatation device (30) comprises a reinforcement element (36) and a dilatation element (38), wherein the reinforcement element (36) connects the at least one dilatation device (30) with the at least two weight bodies (20), and wherein the reinforcement element (36) extends through the dilatation element (38).

7. Weight device (10) according to claim 6, **characterized in that** the reinforcement element (36) is anchored to keep the at least one dilatation device (30) and the at least two weight bodies (20) together.

8. Weight device (10) according to claim 6 or 7, **characterized in that** a length of the reinforcement element (36) extends symmetrically on both sides of the dilatation element (38).

9. Weight device (10) according to any of claims 6 to 8, **characterized in that** the reinforcement element (36) comprises a curved geometry.

10. Weight device (10) according to any of claims 6 to 9, **characterized in that** the reinforcement element (36) comprises two anchors, wherein each anchor is connected to one of the mounting interfaces (22).

11. Production method for producing a weight device (10) for increasing stability of a washing drum of a washing machine, **characterized by** the following steps:
producing at least two weight bodies (20), wherein each weight body (20) has at least one mounting interface (22) to be mounted at a counter-mounting-interface of the washing machine, and wherein each weight body (20) is capable to be placed in a position at least partly surrounding an access opening of the washing machine providing access to the washing drum,
producing at least one dilatation device (30), and
connecting the at least two weight bodies (20) and the at least one dilatation device (30).

12. Production method according to claim 11, **characterized in that** the at least one dilatation device (30) is fixed in a mould in one location and then the at least two weight bodies (20) are cast using the mould.

13. Production method according to claim 11, **characterized in that** the at least two weight bodies (20) are cast using one mould and then the at least two weight bodies (20) are separated or each of the at least two weight bodies (20) is cast using a separate mould.

14. Production method according to claim 13, **characterized in that** the at least one dilatation device (30) is arranged **in that** a first side (32) of the at least one dilatation device (30) faces a first weight body (20) of the at least two weight bodies (20) and a second side (34) of the at least one dilatation device (30) faces a second weight body (20) of the at least two weight bodies (20).

15. Production method according to any of claims 11 to 14, **characterized in that** the at least one dilatation device (30) is produced by passing a reinforcement element (36) through a dilatation element (38).
